# EUROPEAN PATENT SPECIFICATION

(11) **EP 1 700 884 B1**
(45) Date of publication and mention of the grant of the patent: **10.06.2009**
(21) Application number: 06076196.2
(22) Date of filing: 15.07.1999
(51) Int. Cl.: C08K 5/00, C08L 27/12

(54) **UV curable elastomer composition**
UV-vernetzbare Elastomerzusammensetzung
Composition élastomère durcissable par UV

(43) Date of publication of application: 13.09.2006
(62) Divisional of application: 99935585.2
(73) Proprietor: DuPont Performance Elastomers L.L.C., Wilmington, DE 19809 (US)
(72) Inventor: Paglia, Patrick Luigi, 1205 Genève (CH); Ruepping, Christian, 1246 Corsier (CH)
(74) Representative: Kirsch, Susan Edith

(56) References cited:
- EP-A- 0 507 468
- EP-A- 0 570 254
- WO-A-94/06837
- PATENT ABSTRACTS OF JAPAN vol. 010, no. 182 (C-356), 25 June 1986 (1986-06-25) & JP 61 031411 A (SURIIBONDO:KK), 13 February 1986 (1986-02-13)

## Description

### FIELD OF THE INVENTION

This invention relates to elastomeric compositions that are curable by exposure to ultraviolet (UV) radiation. These compositions can be cured to elastomeric seals rapidly, wherein the seals are formed by applying an uncured polymer composition directly onto a sealing element or a surface to be sealed.

### BACKGROUND OF THE INVENTION

Elastomeric compositions require a vulcanization, i.e. curing, step in order to develop the crosslinked network structure which confers optimum rubbery properties to such compositions. Typically, the curing processes are based on compression molding or transfer molding techniques wherein an elastomer, fully compounded with curing agent and other additives, is introduced into a mold that is then heated under pressure. The elevated temperatures used during the molding process cause chemical reaction of the elastomer and curative, thereby producing a crosslinked product.

The particular raw (i.e. uncured) elastomer used to manufacture a synthetic rubber article will be selected with reference to the specific end use application and environment under which the finished article must function. For example, one will select different elastomers from among ethylene alkyl acrylate copolymer rubbers, ethylene alpha-olefin copolymer elastomers, fluoroelastomers and chlorinated elastomers depending upon whether the finished article will be exposed to oils, water, fuels, acids or bases. One will also consider the temperature range to which the article will be subjected and special requirements such as flame resistance. In addition, consideration will be given to the cure characteristics of the polymer and the ease with which defect-free parts can be produced.

The majority of elastomeric seals manufactured on a commercial scale are crosslinked at high temperature in molding processes. Generally, elastomeric seals and gaskets thus produced are manually fitted onto an article to be sealed. Alternatively, adhesives are sometimes utilized to attach the cured sealing member to an article. Such attachment techniques are not completely satisfactory in all cases. In particular, manual methods are time consuming and adhesives can affect the physical properties of the seal.

Elastomeric gaskets are often utilized as sealing members for grooved parts, such as rocker covers and air intake manifolds, that are used in automobile engines. Such gaskets must be resistant to the effects of heat and oil. Traditionally, cured, oil-resistant elastomer compositions, such as ethylene alkyl acrylate copolymer rubbers, have been manually introduced into the groove of a metal part. Many automotive components are now formed from high performance thermoplastic materials, rather than from metal. Manual fitting of elastomeric seals onto these components is time-consuming, but curing the seal in place is impractical because either the cure temperature or, in some cases, the post cure temperature, is usually high enough to cause deformation of the thermoplastic. Yet, if the cure temperature is lowered, cure rate is too slow to be practical. Oil or fuel resistant elastomeric compositions that could be readily applied to an article or groove in their uncured state and that are adapted to low temperature curing techniques would therefore be especially useful in manufacture of thermoplastic articles having attached sealing members for automotive or industrial uses.

Low temperature curing processes that are initiated by high energy radiation, such as electron beam or γ-radiation, are known for use with almost any elastomer, including ethylene acrylate copolymer elastomers. For example, electron beam crosslinking of wire and cable insulation compositions, including elastomeric compositions, is disclosed in E. Brandt and A. Berejka, Electron Beam Crosslinking of Wire and Cable Insulation, Rubber World, 49, Nov. 1978. Eldred, in U.S. Patent 3,950,238, discloses the use of electron beam radiation to cure acrylonitrile butadiene polymers and Clarke, in U.S. Patent 4,275,180, discloses the use of electron beam radiation cure of a blend of an ethylene acrylate copolymer rubber and a thermoplastic polymer, e.g. for cable jacketing. Electron beam cures have the disadvantage of requiring quite complex and expensive equipment for generating high energy particles. It would therefore be advantageous to have available a low temperature curing process that did not rely on the use of electron beam radiation. Low temperature UV cures of a variety of polymers, including ethylene acrylate polymers, are disclosed in U.S. Patent 4,863,536. However, the disclosed process involves dissolution of the particular polymer in an acrylate monomer and is not suitable for preparation of general rubber goods, such as gaskets and seals.

In addition to having available an effective low temperature cure process for ethylene acrylate copolymer elastomers, it would also be advantageous to have available similar curing techniques for use with other elastomers as well. As is the case with ethylene acrylate copolymers, typical curing processes for fluoroelastomers are based on high temperature compression molding or transfer molding techniques. Products made using such processes include seals, gaskets, tubing, and other general rubber goods. In addition, textile composites coated with fluoroelastomers are available commercially and are generally subjected to a baking process during fabrication, for example as disclosed in U.S. Patent 4,770,927 to Effenberger et al.

Low temperature radiation curing processes for fluoroelastomers are known in the prior art. For example, a stain-resistant protective fluoroelastomer coating composition for flooring that is curable using UV radiation is disclosed in European Patent Application 570254. UV cure of epoxy-containing fluorinated copolymers is described in Japanese Kokai Patent Application 5-302058. In addition, UV or electron beam cures of certain fluoroelastomer compositions that are normally cured with a polyol or polyamine crosslinking agent are disclosed in German Patent 19642029 and in Japanese Kokai Patent Application 61-031411. Blends of fluoroplastics and ethylene vinyl acetate copolymers or ethylene acrylic acid ester copolymers that are cured with UV radiation are disclosed in Japanese Kokai Patent Application 5-078539.

These prior art compositions possess interesting properties, but they do not provide compositions that exhibit the tensile strength, modulus, and compression set that is required in many commercial applications, for example air intake manifold gaskets. There thus remains a need in the art for fluoroelastomer compositions that can be cured at low temperature by low energy radiation processes and that, when cured, exhibit excellent tensile strength, modulus, and compression set.

Similarly, chlorinated elastomers such as chlorinated polyethylene, chlorosulfonated polyethylene and epichlorohydrin rubber, are traditionally crosslinked thermally by either ionic or free radical cure systems in compression molds. Extended high temperature exposure of curable compositions containing these polymers can be problematic due to the tendency of these polymers to dehydrochlorinate. Because of the high cure temperatures required, these elastomers have little utility in applications involving formation of elastomer/thermoplastic composites that are cured in place. Just as with ethylene alkyl acrylate elastomers, manufacture of chlorinated elastomer/thermoplastic composite articles requires an elastomer that can be cured at a temperature sufficiently low to preclude deformation of the thermoplastic. Low temperature UV cures of chlorinated polyolefin coating compositions are known. U.S. 4,880,849 discloses a UV-curable chlorinated polyolefin coating having excellent adhesion to plastic substrates. Japanese Kokai Patent Application 63-267 517 discloses UV cure of chlorosulfonated polyethylene rubber and epichlorohydrin hose that is first passed through a UV irradiation apparatus and then vulcanized at elevated temperature for 30-60 minutes. However, chlorinated elastomer compositions that could be readily applied to a groove or an article in their uncured state and that are adapted to low temperature curing techniques are not known in the prior art.

There is thus a need for a method by which an elastomeric sealing composition may be applied to a substrate in an efficient, adhesive-free manner and cured at low temperature to produce a cured seal that has an excellent balance of tensile strength, modulus and compression set.

### SUMMARY OF THE INVENTION

The present invention is directed to curable elastomeric compositions that are capable of being crosslinked at low temperatures. In particular, the present invention is directed to a thermally stable, curable elastomer composition having a Mooney viscosity of 1-150, ML 1+4 (100°C) comprising
A) 70 to 99 weight percent of a fluoroelastomer having at least one cure site selected from the group consisting of 1) copolymerized brominated olefins, chlorinated olefins and iodinated olefins; 2) copolymerized brominated unsaturated ethers, chlorinated unsaturated ethers, and iodinated unsaturated ethers; 3) copolymerized non-conjugated dienes and trienes and 4) iodine atoms, bromine atoms and mixtures thereof that are present at terminal positions of the fluoroelastomer chain;
B) 0.5 to 20 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
C) 0.1 to 10 weight percent of a UV initiator
wherein the elastomer composition in not cured using a free radical curing process which depends on thermal decomposition of peroxides; and
wherein the weight percentages of each of components A), B), and C) are based on the combined weight of components A), B), and C).

### DETAILED DESCRIPTION OF THE INVENTION

The thermally stable, curable compositions of the present invention comprise a fluoroelastomer; a multifunctional crosslinking agent, generally an acrylic or methacrylic crosslinking agent; and a UV initiator. These curable compositions are utilized as starting materials in the process for applying a seal to an article. In preferred embodiments, the elastomer, multifunctional crosslinking agent and UV initiator are present as three separate components. However, the UV initiator may be present as a chemically combined component with the elastomer. That is, the UV initiator may be chemically incorporated into the elastomeric component as a polymer-bound photoinitiator. Such polymer-bound photoinitiators are disclosed, for example in U.S. Patent 5,128,386 wherein a photoinitiator is described that is copolymerized with an acrylate copolymer.

The compositions are curable by the action of UV radiation. They are thermally stable at temperatures used to process uncured elastomer formulations, e.g. in mixing or extruding operations. Such temperatures generally range from 25°C to 250°C. By thermally stable is meant that the compositions do not spontaneously form a crosslinked network, i.e. they do not prematurely cure or scorch. That is, the viscosity of the compositions remains constant, within ± 50% of the initial value when heated to the processing temperature, as indicated by lack of a substantial increase in torque (i.e. an increase of less than 1 dNm) when subjected to the processing temperature for 30 minutes in a Moving Die Rheometer. The appropriate processing temperature will depend on the decomposition temperature of the particular UV initiator and multifunctional crosslinking agent that is employed. However, the processing temperature must be sufficiently high so that the curable elastomer composition flows to the degree required for the production process. This temperature will generally be from 25°C to 250°C, preferably from 90°C to 170°C. The compositions, when heated or subjected to mechanical working, such as in a screw extruder, gear pump, or piston pump, are capable of viscoelastic flow and may be metered and formed into shaped articles, such as seals. These articles may then be cured by exposure to UV radiation.

The elastomeric component of the thermally stable compositions of the invention may be any of the members of the following classes of raw (i.e. uncured) elastomeric polymers: fluoroelastomers having copolymerized units of iodinated, brominated, or chlorinated cure site monomers, fluoroelastomers having copolymerized units of non-conjugated dienes and fluoroelastomers having bromine or iodine atoms at terminal positions of the fluoroelastomer.

Fluoroelastomers suitable for use as the elastomeric component of the compositions of the invention include fluoroelastomers comprising copolymerized units of one or more monomers containing fluorine, such as vinylidene fluoride, hexafluoropropylene, 1-hydropentafluoropropylene, 2-hydropentafluoro-propylene, tetrafluoroethylene, chlorotrifluoroethylene, and perfluoro(alkyl vinyl) ether, as well as other monomers not containing fluorine, such as ethylene, and propylene. Elastomers of this type are described in Logothetis, Chemistry of Fluorocarbon Elastomers, Prog. Polym. Sci., Vol. 14, 251-296 (1989). The polymers may be prepared by polymerization of the appropriate monomer mixtures with the aid of a free radical generating initiator either in bulk, in solution in an inert solvent, in aqueous emulsion or in aqueous suspension. The polymerizations may be carried out in continuous, batch, or in semi-batch processes. General preparative processes are disclosed in the Logothetis article and in U.S. Patent Numbers 4,281,092; 3,682,872; 4,035,565; 5,824,755; 5,789,509; 3,051,677; and 2,968,649.

Specific examples of such fluoroelastomers include copolymers of vinylidene fluoride and hexafluoropropylene and, optionally, tetrafluoroethylene; copolymers of vinylidene fluoride and chlorotrifluoroethylene; copolymers of vinylidene fluoride, hexafluoropropylene, tetrafluoroethylene and chlorotrifluoroethylene; copolymers of tetrafluoroethylene and propylene; and copolymers of tetrafluoroethylene and perfluoro(alkyl vinyl) ether, preferably perfluoro(methyl vinyl) ether. Each of the fluoroelastomers of the composition of the invention also comprises at least one halogenated cure site or a reactive double bond resulting from the presence of a copolymerized unit of a non-conjugated diene. The halogenated cure sites may be copolymerized cure site monomers or halogen atoms that are present at terminal positions of the fluoroelastomer polymer chain. The cure site monomers, reactive double bonds or halogenated end groups are capable of reacting to form crosslinks. The cure site monomers are selected from the group consisting of brominated, chlorinated, and iodinated olefins; brominated, chlorinated, and iodinated unsaturated ethers and non-conjugated dienes.

The brominated cure site monomers may contain other halogens, preferably fluorine. Examples are bromotrifluoroethylene, 4-bromo-3,3,4,4-tetrafluorobutene-1 and others such as vinyl bromide, 1- bromo-2,2-difluoroethylene, perfluoroallyl bromide, 4-bromo-1,1,2-trifluorobutene, 4-bromo-1,1,3,3,4,4,-hexafluorobutene, 4-bromo-3-chloro-1,1,3,4,4-pentafluorobutene, 6-bromo-5,5,6,6-tetrafluorohexene, 4-bromoperfluorobutene-1 and 3,3-difluoroallyl bromide. Brominated unsaturated ether cure site monomers useful in the invention include ethers such as 2-bromo-perfluoroethyl perfluorovinyl ether and fluorinated compounds of the class CF₂Br-R_{f}-O-CF=CF₂. such as CF₂BrCF₂ O-CF=CF₂, and fluorovinyl ethers of the class ROCF=CFBr or ROCBr=CF₂, where R is a lower alkyl group or fluoroalkyl group, such as CH₃OCF=CFBr or CF₃CH₂ OCF=CFBr.

Iodinated olefins may also be used as cure site monomers. Suitable iodinated monomers include iodinated olefins of the formula: CHR=CH-Z-CH₂CHR-I, wherein R is -H or -CH₃; Z is a C₁-C₁₈ (per)fluoroalkylene radical, linear or branched, optionally containing one or more ether oxygen atoms, or a (per)fluoropolyoxyalkylene radical as disclosed in U.S. Patent 5,674,959. Other examples of useful iodinated cure site monomers are unsaturated ethers of the formula: I(CH₂CF₂CF₂)ₙOCF=CF₂ and ICH₂CF₂O[CF(CF₃)CF₂O]ₙCF=CF₂, and the like, wherein n=1-3, such as disclosed in U.S. Patent 5,717,036. In addition, suitable iodinated cure site monomers including iodoethylene, 4-iodo-3,3,4,4-tetrafluorobutene-1; 3-chloro-4- iodo -3,4,4-trifluorobutene; 2-iodo -1,1,2,2-tetrafluoro-1-(vinyloxy)ethane; 2- iodo-1-(pertluorovinyloxy)-1,1,-2,2-tetrafluoroethylene; 1,1,2,3,3,3-hexafluoro-2- iodo-1-(perfluorovinyloxy)propane; 2-iodoethyl vinyl ether; 3,3,4,5,5,5-hexafluoro-4-iodopentene; and iodotrifluoroethylene, are disclosed in U.S. Patent 4,694,045.

Examples of non-conjugated diene cure site monomers include 1,4-pentadiene, 1,5-hexadiene, 1,7-octadiene and others, such as those disclosed in Canadian Patent 2,067,891. A suitable triene is 8-methyl-4-ethylidene-1,7-octadiene.

Of the cure site monomers listed above, preferred compounds include 4-bromo-3,3,4,4-tetrafluorobutene-1; 4-iodo-3,3,4,4-tetrafluorobutene-1; and bromotrifluoroethylene.

Additionally, or alternatively, iodine, bromine or mixtures thereof may be present at the fluoroelastomer chain ends as a result of the use of chain transfer or molecular weight regulating agents during preparation of the fluoroelastomers. Such agents include iodine-containing compounds that result in bound iodine at one or both ends of the polymer molecules. Methylene iodide; 1,4-diiodoperfluoro-n-butane; and 1,6-diiodo-3,3,4,4,tetrafluorohexane are representative of such agents. Other iodinated chain transfer agents include 1,3-diiodoperfluoropropane; 1,4-diiodoperfluorobutane; 1,6-diiodoperfluorohexane; 1,3-diiodo-2-chloroperfluoropropane; 1,2-di(iododifluoromethyl)-perfluorocyclobutane; monoiodoperfluoroethane; monoiodoperfluorobutane; 2-iodo -1-hydroperfluoroethane; etc. Particularly preferred are diiodinated chain transfer agents. Examples of brominated chain transfer agents include 1-bromo-2-iodoperfluoroethane; 1-bromo-3-iodoperfluoropropane; 1-iodo-2-bromo-1,1-difluoroethane and others such as disclosed in U.S. Patent 5,151,492.

Copolymers of ethylene, tetrafluoroethylene, perfluoro(alkyl vinyl) ether and a bromine-containing cure site monomer, such as those disclosed by Moore, in U.S. Patent 4,694,045 are suitable for use in the present invention. Copolymers of tetrafluoroethylene and perfluoro(alkyl vinyl) ether commonly containing fluorinated nitrile cure sites, for example perfluoro(8-cyano-5-methyl-3,6-dioxa-1-octene) and others disclosed in U.S. Patent 4,983,697, may also be used. Other useful fluoroelastomers containing brominated or iodinated olefin cure site monomers are described in U.S. Patent Nos. 4,035,565; 4,564,662; 4,745,165; 4,694,045; 4,948,852; and 4,973,633.

Each of these classes of copolymers includes dipolymers or higher order copolymers having copolymerized units of other comonomers.

It has been found that raw fluoroelastomers having Mooney viscosities in the range of 5-150, ML 1+4 (121°C), preferably 10-70, ML 1+4 (121°C), are particularly useful in the compositions of the present invention. Those compositions wherein the fluoroelastomer has a Mooney viscosity within the preferred range exhibit an optimum balance of processability and tensile properties.

It has also been found that compositions containing fluoroelastomers having levels of copolymerized cure site monomer units within the range of 0.05-10.0 wt.% exhibit enhanced cure state.

The elastomeric component of the compositions of the invention may be a blend of elastomers as well as a single elastomer. The blends may be mixtures of polymers of the same class, for example, a brominated fluoroelastomer and an iodinated fluoroelastomer, or they may be mixtures of more than one type of elastomer.

Blends wherein only one elastomer is capable of cure by exposure to UV radiation are also contemplated by the invention. Blend compositions would be particularly useful for balancing physical properties. For example, it would be desirable to balance state of cure with fuel resistance by blending fluoroelastomers with epichlorohydrin rubbers. In other circumstances, blends of costly polymers with less expensive polymers often yield a combination of properties that are adequate for less demanding applications. In this context, blends of fluoroelastomers and nitrile rubber or fluoroelastomers and ethylene acrylate copolymer elastomers would be suitable for use as the elastomeric component of the compositions of the invention. The Mooney viscosities of the blends are within the range of 1-150 because within this range the blends will be suitable for use in producing general rubber articles, such as seals.

In addition to an elastomeric component, the curable compositions of the invention also include at least one multifunctional crosslinking agent. Preferably the multifunctional crosslinking agent will be an acrylic or methacrylic crosslinking agent. In addition, it may be a multifunctional cyanurate or multifunctional isocyanurate, such as triallyl isocyanurate or triallyl cyanurate. By multifunctional acrylic or methacrylic crosslinking agent is meant an ester that is a reaction product of a polyhydroxylic compound, generally a polyhydroxylic alcohol, and acrylic acid or methacrylic acid, wherein the crosslinking agent has at least two carbon-carbon double bonds. Such compositions are commonly referred to in the art as multifunctional acrylates or multifunctional methacrylates. Typical multifunctional acrylates and methacrylates have molecular weights of 150 to 1,000 and contain at least two polymerizable unsaturated groups per molecule.

Representative multifunctional acrylic crosslinking agents include acrylates and methacrylates such as ethylene glycol diacrylate; ethylene glycol dimethacrylate; 1,6-hexanediol diacrylate; 1,6-hexanediol dimethacrylate;
1,4-butanediol diacrylate; pentaerythritol triacrylate; pentaerythritol tetraacrylate; dipentaerythritol pentaacrylate, methoxy-1,6-hexanediolpentaerythritol triacrylate; trimethylolpropane triacrylate; tetraethylene glycol diacrylate; polymethacrylate urethanes; epoxy acrylates; polyester acrylate monomers and oligomers; trimethylolpropane propoxylate triacrylate; poly-n-butyleneoxide glycol diacrylates; and bisphenol A alkylene oxide adduct diacrylates. Trimethylolpropane triacrylate and trimethylolpropane trimethacrylate are preferred crosslinking agents because these compounds are readily available. In addition, compression set and crosslink density are enhanced in compositions containing these crosslinking agents compared to compositions containing difunctional acrylates, such as diethylene glycol dimethacrylate.

The multifunctional acrylic and methacrylic crosslinking agents are capable of homopolymerization when irradiated. Thus, when the curable compositions of the invention that contain multifunctional acrylates or methacrylates are exposed to UV radiation, two reactions occur simultaneously. The multifunctional crosslinking agent reacts with the elastomeric polymer component to form interchain and intrachain crosslinks, resulting in a rubber matrix. In addition, excess multifunctional crosslinking agent will homopolymerize and form an interpenetrating network which acts to reinforce the rubber matrix, much in the same manner as fillers reinforce elastomers. It is therefore possible to control the hardness of the final cured product by adjusting the proportion of multifunctional crosslinker present in the curable composition. In general, difunctional acrylates and methacrylates are less efficient crosslinking agents compared to their analogues having higher functionalities. Consequently, crosslinking agents of the class having higher functionalities are preferred for purposes of the present invention.

Elastomeric materials compounded and cured according to methods commonly used in rubber processing technology generally contain carbon black or mineral fillers as reinforcing agents. Reinforcement is reflected in properties such as hardness, modulus, and tensile strength. Generally, reinforced elastomers are characterized by non-linear stress/strain dependence. In contrast, non-reinforced elastomer compositions are characterized by an initial stress build-up at low deformation which does not substantially increase at higher deformation. Further, non-reinforced elastomer compositions tend to break at relatively low ultimate tensile strength.

Use of fillers in UV-initiated reactions would normally be expected to interfere with the UV curing process. However, the present process permits curing of translucent compositions. Thus, the compositions of the present invention may contain a limited amount of fillers, generally no more than 15 parts by weight per 100 parts polymer. Reinforcement is effected simultaneously with crosslinking by formation of an interpenetrating network. The resultant product exhibits stress/strain behavior that is more linear than that of traditional elastomers which contain fillers which are not chemically bound to the elastomer matrix.

The amount of multifunctional crosslinking agent present in the compositions of the invention will depend on the particular elastomer used. The amount ranges from 0.5 to 20 weight percent, based on the combined weight of polymer, multifunctional crosslinking agent, and UV initiator.

The third component of the curable compositions of the invention is a UV initiator. It may be selected from those organic chemical compounds conventionally employed to promote UV-initiated formation of radicals either by intramolecular homolytic bond cleavage or by intermolecular hydrogen abstraction. Such agents include organic compounds having aryl carbonyl or tertiary amino groups. Among the compounds suitable for use are benzophenone; acetophenone; benzil; benzaldehyde; o-chlorobenzaldehyde; xanthone; thioxanthone; 9,10-anthraquinone; 1-hydroxycyclohexyl phenyl ketone;
2,2-diethoxyacetophenone; dimethoxyphenylacetophenone; methyl diethanolamine; dimethylaminobenzoate; 2-hydroxy-2-methyl-1-phenylpropane-1-one; 2,2-di-sec-butoxyacetophenone; 2,2-dimethoxy-1,2-diphenylethan-1-one; benzil dimethoxyketal; benzoin methyl ether; and phenyl glyoxal. Upon exposure to UV radiation, a variety of photochemical transformations may occur, for example, the UV initiator may form free radical reactive fragments that react with the acrylate end groups of the multifunctional acrylic or methacrylic crosslinking agent. This initiates crosslinking of the polymer as well as homopolymerization of the acrylic or methacrylic crosslinking agent. A preferred UV initiator is 1-hydroxycyclohexyl phenyl ketone because of the rapidity with which it generates free radicals when exposed to UV radiation. Mixtures of UV initiators may also be used. This is often desirable because it provides more efficient production of radicals in certain cases. The UV initiator is present in an amount of 0.1 to 10.0 weight percent, based on the total weight of polymer, multifunctional crosslinking agent, and UV initiator. However, it is preferable to use between 0.5-2.5 weight percent UV initiator, most preferably 0.5-1.0 weight percent UV initiator, based on total weight of polymer, crosslinking agent and UV initiator, because high levels of photoinitiator tend to interfere with penetration and do not substantially contribute to the overall crosslink density. Within the ranges disclosed herein, there is an optimum level of photoinitiator for each particular combination of uncured gum elastomer and crosslinking agent. These optimum levels can be readily determined by one skilled in the art. For example, hydrogenated nitrile rubber will generally require a higher level of photoinitiator than a copolymer of ethylene, methyl acrylate, and ethyl hydrogen maleate. Higher levels of photoinitiator increase the crosslink density at the surface of the cured composition. Low levels of photoinitiators can result in better (i.e. lower) compression sets of samples that are several millimeters thick.

In addition, for purposes of the present invention, the processing temperature must not exceed the temperature at which thermal degradation of the UV initiator occurs. In some cases such degradation would result in scorchy compositions due to formation of free radicals. This is so because thermally-induced fragmentation of the initiator within the processing equipment results in premature crosslinking of the elastomer. In other instances, slow curing compositions would result due to inactivation of the initiator. Degradation temperatures will differ for each particular UV initiator. Depending upon the type of rubber and the amount of additives, the processing temperature will range from between 25° and 250°C. It is an object of the invention to provide stable elastomeric compositions which can be applied to a substrate at temperatures of up to 250°C. A further practical limitation on the processing temperature is that the temperature must not exceed the softening point of the substrate to which it is applied.

The elastomeric component, multifunctional crosslinking agent component, and UV initiator component are present in the compositions of the present invention in specific relative ratios. The elastomer is present in an amount of 70-99 weight percent, based on the total weight of elastomer, crosslinking agent, and UV initiator. The multifunctional crosslinking agent is present in an amount of 0.5-20 weight percent, based on the total weight of elastomer, crosslinking agent, and UV initiator. Finally, the UV initiator is present in an amount of 0.1-10 weight percent based on the total weight of elastomer, crosslinking agent, and UV initiator. Preferably, the elastomeric component will be present in an amount of from 75-95 weight percent, based on the total weight of elastomer, crosslinking agent, and UV initiator. The level of crosslinker determines compression set resistance and hardness in the curable composition of the invention. Preferably the multifunctional crosslinker is present in an amount of 4-15 weight percent based on the weight of elastomer, crosslinker and UV initiator. If less than about 4 weight percent crosslinker is present, a composition having fairly low hardness and relatively high compression set resistance is formed. Greater than about 15 weight percent crosslinker results in a cured composition of high modulus, low elongation at break, and poor compressability of the cured composition. Such compositions are less desirable for use in sealing, especially gasketing, applications. The particular component range selected will thus depend on the specific end use contemplated.

Various additives, commonly used in rubber compounding, may be incorporated into the compositions of the present invention to modify, stabilize, and reinforce them. Preferably, such additives will be used in amounts which do not interfere substantially with the crosslinking reaction of the uncured polymeric component. For example, if large amounts of fillers that are opaque to UV light are utilized, the filled compositions will not cure evenly throughout, or only the surface of the composition will be cured. Usually, fillers may be employed in amounts of up to about 15 parts per hundred parts of elastomer. Typical examples include non-black fillers such as minerals or glass fibers. Polymeric fillers of high reinforcing efficiency, such as polytetrafluoroethylene and aramid fibers, may also be used, generally at low levels. The presence of additives does not raise the viscosity of the curable composition used in the process of the invention to more than ML 1+4 (100°C) of 150 or lower it to less than ML 1+4 (100°C) of 1. Compositions outside this range are not suitable for the gasketing in place process.

Preferred curable compositions of the present invention will include 0.01-2.0 parts by weight per hundred parts by weight fluoroelastomer of an organotin hydride. Compositions wherein this additive is present exhibit excellent cure profiles. That is, the cure rate increases rapidly after initiation and the cure state remains high throughout the cure process. Preferably 0.1-1 parts by weight of the organotin hydride will be used per 100 parts by weight fluoroelastomer. Tri-n-butyltin hydride is preferred.
Small amounts of inhibitors may also be present in the compositions of the invention as a result of the presence of these additives in commercial samples of acrylic or methacrylic crosslinking agents. The inhibitors are generally present in low amounts, for example below 1500 ppm (parts per million, based on the weight of the crosslinking agent). They act to prevent thermally induced polymerization of the crosslinking agents during storage and shipment.

The compositions of the invention are particularly suited for manufacture of elastomeric seals and gaskets in situ using a technique we refer to herein as gasketing-in-place. According to this technique, a curable elastomeric composition is heated to a temperature of 25°-250°C, preferably 90°C-170°C. The heated composition is then metered onto a substrate to form an uncured seal of a desired thickness which is then cured. Thus, the seal is formed in place directly on the object to be sealed, rather than in a separate molding step. Typically, uncured seals are formed in thicknesses of 1-15 mm, preferably in thicknesses of 2-8 mm.

Robotized hot melt equipment may be used to apply gaskets in place. In one embodiment, a curable composition comprising a low viscosity elastomer component, multifunctional crosslinking agent, and UV initiator, is introduced to a drum having a heated platen and piston. The composition, when heated, becomes soft and extrudable. It is forced out of the drum by the action of the piston, generally at relatively low pressures, typically less than 5.0 bars (i.e. 0.5 MPa). The composition is then fed by gear or piston pumping through heated tubing to an application gun fitted to a multidimensional industrial robot capable of precise and rapid metering. In this way, the composition can be introduced into a groove of a part such as a thermoplastic article that has just been produced, for example by molding. The bead of uncured elastomer in the groove solidifies rapidly as it cools and forms an uncured sealing element. The groove can be in a part made from other materials as well, including but not limited to metal. Alternatively, the composition can be deposited onto the exterior of an object to form a seal. This hot melt application method is preferred for low viscosity elastomers, generally of Mooney viscosity 1-20 ML 1+4 (100°C). The method permits extrusion from a drum using relatively low pressures. Continuous feeding and metering pumps are capable of handling compositions of the invention having viscosities up to 1000 Pa.s. Hot melt equipment may be used for compositions having somewhat higher viscosities, for example ML 1+4 (100°C) of 70, by employing an extruder to introduce the composition into the heated tubing. The viscosity thereupon decreases, permitting formation of seals from the higher viscosity compositions.

In another embodiment, relatively high viscosity compositions or compositions of relatively low heat resistance may be formed into uncured seals by the gasketing in place technique. Instead of using hot melt equipment, screw extruders are exclusively utilized to deliver the elastomeric composition to the article to be sealed. This technique is particularly useful when fluoroelastomers of Mooney viscosity 10-90 [ML 1+ 10 (121°C)] are employed as the elastomeric component of the invention. An extruder that is used in combination with a flexible arm to apply a bead of uncured elastomer to a groove is particularly preferred for such gasketing-in-place processes. This differs from conventional extruder technology in that the extruder is not utilized to form the finished part. Instead, it pumps the uncured elastomer composition to a robotized application head that meters the composition and deposits it at the location to be sealed. Use of screw extruders results in relatively high energy input to the polymer compared with processes that utilize hot melt equipment. In order to minimize elastomer degradation in the extruder, the extrusion process must not cause the temperature of the compound to rise above 250°C. This generally requires slow extrusion speeds. Consequently, extrusion processes are generally slower methods of manufacture. Further, such equipment requires high investment costs. Those skilled in the art will recognize that the appropriate temperature for extrusion will be dependent on the viscosity of the uncured elastomer, the molecular weight of the uncured elastomer, the level of crosslinking agent, the decomposition temperature of the photoinitiator and the volatilization temperature of the crosslinking agent and will select a value within the range of 25°-250°C that is optimum for the particular circumstances.

The gasketing process may be employed for manufacture of seals and gaskets using the compositions of the present invention or other curable elastomer compositions. The elastomer component will be present in an amount of from 70-99 parts by weight, the multifunctional crosslinker will be present in an amount of 0.5-20 parts by weight, and the UV initiator will be present in an amount of 0.1-10 parts by weight, all based on the combined weight of elastomer, crosslinker, and UV initiator.

The proportion of elastomer, multifunctional crosslinking agent, and UV initiator will preferably be in the weight ratio of 70-99:0.5-19.5:0.1-10, respectively.

In order to optimize the elastomeric properties of seals made by the above-described processes, they must be crosslinked, i.e. cured. It would be impractical to utilize a heat-activated cure system to accomplish a rapid crosslinking reaction in such processes. One would risk converting the curable composition used to form the seals to an intractable, crosslinked material during the metering step. Specifically, as the curable composition was heated or subjected to temperature elevation caused by mechanical working, the crosslinking reaction would be triggered. It would be difficult to control premature gelling (i.e. scorch) during metering. Because crosslinked compositions do not flow readily, processes which result in scorchy products are undesirable. Consequently, heterolytic cure systems, which rely on thermally-induced crosslinking reactions, are not appropriate. In addition, the most common homolytic, i.e. free radical, curing processes, which depend on thermal decomposition of peroxides, are also unsuitable. It has, however, been found that curable compositions of the invention can be effectively cured by UV induced free radical processes.

UV cure of elastomeric compositions of the invention may be accomplished at room temperature or at higher temperatures. For example, in certain circumstances wherein the elastomeric composition is to be used as a sealant, it may be desirable to perform a photocure immediately after application of the uncured composition to the object to be sealed. At that point, the temperature of the composition may be as high as 250°C. However, heating the curable composition is neither necessary nor particularly desirable for an effective photocure. In addition, when the compositions are used to form seals by the gasketing-in-place technique on thermoplastic articles, low temperature cure minimizes any possibility of degradation or thermal distortion of the thermoplastic. Further, it is not necessary to perform the UV irradiation in an inert atmosphere. The cure reaction can be conducted under atmospheric conditions with no deleterious effects.

The wavelength spectrum of radiation used to effect the curing reaction typically corresponds to the absorption maximum of the UV initiator. This typically ranges from about 200-400 nanometers. Suitable UV radiation sources include medium pressure mercury vapor lamps, electrodeless lamps, pulsed xenon lamps, and hybrid xenon/mercury vapor lamps. A preferred arrangement comprises one or more lamps together with a reflector, which diffuses the radiation evenly over the surface to be irradiated. The radiation dosage must be sufficient to cure the polymeric composition, i.e. to produce a cured composition having a compression set of 90 or lower, preferably 50 or lower, and an elongation at break of at least 100%. A dosage of at least about 10 joules per square centimeter, and preferably 20 joules is usually sufficient for optimum cure. Dosage is a function of the time of exposure to the UV radiation, the distance from the UV radiation source and the power level of the radiation source. The required radiation dose can be readily determined by curing small samples of the curable composition and measuring physical properties, such as tensile strength, compression set and elongation, after cure. In most instances, an acceptable degree of cure can be obtained by exposures of 30-300 seconds using a lamp of about 80 W/cm. Appropriate adjustments may be made depending on the power of the lamp, distribution of the output over the UV range, the thickness of the sample as well as the polymeric component, level of crosslinking agent present, and level of filler present. For example, ethylene acrylate copolymer rubber containing filler would require a longer cure time than the same composition without filler.

Foaming agents may be incorporated into the curable compositions of the present invention. In such circumstances a cellular structure will be formed by exposure of the curable composition to UV radiation as a result of thermal decomposition of the foaming agent induced by simultaneous heating that occurs during exposure to UV light. This heating phenomenon may be augmented and controlled by additional external application of heat. Typical foaming agents that may be employed include p,p'-oxybisbenzenesulfonyl hydrazide, azodicarbon-amides, p-toluenesulfonyl semicarbazides, and dinitrosopentamethylene tetramine. Alternatively, the UV curing reaction may also be accomplished with cooling, so that curing and foaming occur sequentially, rather than simultaneously. That is, the curable composition is exposed to UV radiation with cooling, and the cured composition is then passed through a hot air tunnel to cause foaming. Closed cell structures of low specific gravity may be prepared by such processes. For example, structures with specific gravities of 0.25-6.0 g/cm³ may be obtained.

The curable elastomeric compositions of the present invention are useful in manufacture of general rubber goods, coating compositions, foams and wire coating. They are most advantageously used however, in preparation of seals and gaskets for thermoplastic articles, particularly those employed in automotive applications.

The invention is illustrated by the following specific embodiments wherein all parts are by weight unless otherwise indicated.

### EXAMPLES

### Example 1

A curable elastomeric composition of the invention, Sample 1A, was prepared by mixing the following components on a rubber mill: 94 parts of a copolymer of vinylidene fluoride (VF₂), perfluoromethyl perfluorovinyl ether (PMVE), tetrafluoroethylene (TFE), and 4-bromo-3,3,4,4-tetrafluorobutene-1 (BTFB) (weight ratio VF₂:TFE:PMVE:BTFB 54:10:35:1.2), 6.0 parts trimethylolpropane triacrylate, and 0.5 parts Irgacure 1800^{®} photoinitiator. The milled composition was shaped into uncured slabs of 2 mm thickness were shaped by molding in a mold coated with Teflon^{®}fluoropolymer resin. An uncured slab was exposed for one minute to UV radiation from a medium pressure mercury lamp that emitted radiation of wavelength approximately 250-400 nm at 80 watts/cm. The distance of the samples from the lamp was 10 cm. The cured samples exhibited the properties shown in Table I. Two additional samples, 1B and 1C, were prepared in substantially the same manner except that Sample 1B contained 8 parts of trimethylolpropane triacrylate and Sample 16C contained 0.5 parts tri-n-butyltin hydride in addition to the 6 parts of trimethylolpropane triacrylate. Samples 1B and 1C were cured substantially in the same manner as Sample 1A. Physical properties of the cured slabs are shown in Table I.

**TABLE I**

| *Sample Composition* | 1A | 1B | 1C |
|---|---|---|---|
| Polymer | 94 | 92 | 94 |
| Trimethylolpropane triacrylate | 6 | 8 | 6 |
| Irgacure^{®} 1800 Photoinitiator | 0.5 | 0.5 | 0.5 |
| Tri-n-butyltin hydride | --- | --- | 0.5 |
| Physical Properties | | | |
| Hardness, Shore A (pts) Surface Exposed to Radiation | 59 | 70 | -- |
| T_{B} (MPa) | 9.1 | 10.9 | 13.8 |
| M₁₀₀ (MPa) | 3.1 | 5.4 | 7 |
| E_{B} (%) | 450 | 339 | 273 |
| Compression Set (%) 22 hours, 150°C, 25% deflection, 2 minute UV exposure | 69 | --- | 36 |

### Example 2

A curable elastomeric composition of the invention. Sample 2A, was prepared by mixing the following components on a rubber mill: 94 parts of an iodinated copolymer VF₂, PMVE, TFE, and BTFB (weight ratio VF₂:TFE:PMVE:BTFB 54:10:35:0.6; prepared in the presence of an iodinated chain transfer agent and having an iodine content of 0.18), 6.0 parts trimethylolpropane triacrylate, and 1 part Irgacure 1800^{®} photoinitiator. The milled composition was shaped into uncured slabs of 2 mm thickness were shaped by molding in a mold coated with Teflon^{®} fluoropolymer resin. An uncured slab was exposed for one minute to UV radiation from a medium pressure mercury lamp which emitted radiation of wavelength approximately 250-400 nm at 80 watts/cm. The distance of the samples from the lamp was 10 cm. The cured samples exhibited the properties shown in Table II. Three additional samples, 2B, 2C, and 2D, were prepared in substantially the same manner except that each contained 0.5 parts of Irgacure 1800, Sample 2B contained 94 parts of an iodine-free copolymer of VF₂, PMVE, TFE, and BTFB having a monomer ratio of 54:10:35:1.2; Sample 2C contained 94 parts of an iodine-free copolymer of VF₂, PMVE, TFE, and BTFB having a monomer ratio of 52.9:10.2:34.9:2.2; and Sample 2D contained 94 parts of an iodine-free copolymer of VF₂, PMVE, TFE, and BTFB having a monomer ratio of 53.5:10:34.4:2.2. Samples 2B-2D were cured substantially in the same manner as Sample 2A. Physical properties of the cured slabs are shown in Table II.

**TABLE II**

| Sample Composition | 2A | 2B | 2C | 2D |
|---|---|---|---|---|
| Polymer | 94 | 94 | 94 | 94 |
| Trimethylolpropane triacrylate | 6 | 6 | 6 | 6 |
| Irgacure^{®}1800 Photoinitiator | 1 | 0.5 | 0.5 | 0.5 |
| Physical Properties | | | | |
| Hardness, Shore A (pts) Surface Exposed to Radiation | 49 | 59 | 60 | --- |
| | | | | |
| T_{B} (MPa) | 2 | 9.1 | 7.5 | 9.9 |
| M₁₀₀ (MPa) | 1.4 | 3.1 | 3.3 | 3.8 |
| E_{B} (%) | 537 | 450 | 346 | 431 |
| Compression Set (%) 22 hours, 150°C, 25% deflection, 2 minute UV exposure | --- | 69 | 75.3 | 76.2 |

### Example 3

A curable elastomeric composition of the invention, Sample 3A, was prepared by mixing the following components on a rubber mill: 92 parts of a copolymer VF₂, PMVE, TFE, and BTFB (weight ratio VF₂:TFE:PMVE:BTFB 52.9:10.2:34.9:2.0), 8.0 parts trimethylolpropane triacrylate, and 0.5 parts Irgacure 1800^{®} photoinitiator. The milled composition was shaped into uncured slabs of 2 mm thickness were shaped by molding in a mold coated with Teflon^{®} fluoropolymer resin. An uncured slab was exposed for one minute to UV radiation from a medium pressure mercury lamp which emitted radiation of wavelength approximately 250-400 nm at 80 watts/cm. The distance of the samples from the lamp was 10 cm. The cured samples exhibited the properties shown in Table III. An additional sample, 3B, was prepared in substantially the same manner. However, Sample 3B contained 100 parts polymer and additionally contained 0.5 parts tri-n-butyltin hydride. Sample 3B was cured substantially in the same manner as Sample 3A. Physical properties of the cured slabs are shown in Table III.

**TABLE III**

| Sample Composition | 3A | 3B |
|---|---|---|
| Polymer | 92 | 100 |
| Trimethylolpropane triacrylate | 8 | 8 |
| Irgacure^{®}1800 Photoinitiator | 0.5 | 0.5 |
| Tri-n-butyltin Hydride | --- | 0.5 |
| Physical Properties | | |
| Hardness, Shore A (pts) Surface Exposed to Radiation | -- | 68 |
| | | |
| T_{B} (MPa) | 10 | 11.8 |
| M₁₀₀ (MPa) | 6 | 6.3 |
| E_{B} (%) | 284 | 239 |
| Compression Set (%) 22 hours, 120C, 25% deflection, 2 minute UV exposure | 74.4 | 35.4 |

### Example 4

A curable elastomeric composition of the invention, Sample 4A, was prepared by mixing the following components on a rubber mill: 92 parts of a copolymer VF₂, PMVE, TFE, and BTFB (weight ratio VF₂:TFE:PMVE:BTFB 53.5:10:34.4:2.2), 8.0 parts trimethylolpropane triacrylate, and 0.5 parts Irgacure 1800^{®} photoinitiator. The milled composition was shaped into uncured slabs of 2 mm thickness were shaped by molding in a mold coated with Teflon^{®}fluoropolymer resin. An uncured slab was exposed for one minute to UV radiation from a medium pressure mercury lamp which emitted radiation of wavelength approximately 250-400 nm at 80 watts/cm. The distance of the samples from the lamp was 10 cm. The cured samples exhibited the properties shown in Table IV. An additional sample, 4B, was prepared in substantially the same manner. However, Sample 4B contained 100 parts polymer, 1 part Irgacure 1800^{®} photoinitiator and additionally contained 1 part tri-n-butyltin hydride. Sample 4B was cured substantially in the same manner as Sample 4A. Physical properties of the cured slabs are shown in Table IV.

**TABLE IV**

| Sample Composition | 4A | 4B |
|---|---|---|
| Polymer | 92 | 100 |
| Trimethylolpropane triacrylate | 8 | 8 |
| Irgacure^{®}1800 Photoinitiator | 0.5 | 1.0 |
| Tri-n-butyltin Hydride | --- | 0.5 |
| Physical Properties | | |
| Hardness, Shore A (pts) Surface Exposed to Radiation | 61 | 71 |
| T_{B} (MPa) | 9.9 | 11.8 |
| M₁₀₀ (MPa) | 5.7 | 7.3 |
| E_{B} (%) | 356 | 215 |
| Compression Set (%) 22 hours, 150°C, 25% deflection, 2 minute UV exposure | 71.5 | 43.3 |

## Claims

1. A thermally stable, UV-curable elastomer composition having a Mooney viscosity of
1-150, ML 1+4 (100°C), comprising:
a) 70 to 99 weight percent of a fluoroelastomer having at least one cure site selected from the group consisting of 1) copolymerized brominated olefins, chlorinated olefins and iodinated olefins; 2) copolymerized brominated unsaturated ethers, chlorinated unsaturated ethers, and iodinated unsaturated ethers; 3) copolymerized non-conjugated dienes and trienes and 4) iodine atoms, bromine atoms and mixtures thereof that are present at terminal positions of the fluoroelastomer chain;
b) 0.5 to 20 weight percent of a multifunctional crosslinking agent selected from the group consisting of multifunctional acrylic crosslinking agents, multifunctional methacrylic crosslinking agents, multifunctional cyanurate crosslinking agents, and multifunctional isocyanurate crosslinking agents; and
c) 0.1 to 10 weight percent of a UV initiator;
wherein the elastomer composition is not cured using a free radical curing process which depends on thermal decomposition of peroxides; and
wherein the weight percentages of each of components a), b), and c) are based on the combined weight of components a), b), and c).

2. The composition of Claim 1 wherein the fluoroelastomer is a copolymer comprising copolymerized units of vinylidene fluoride.

3. The composition of Claim 1 wherein the fluoroelastomer is a copolymer comprising copolymerized units of tetrafluoroethylene.

4. The composition of Claim 1 wherein at least one cure site is selected from the group consisting of 1) copolymerized iodinated olefins; 2) copolymerized iodinated unsaturated ethers; and 3) iodine atoms that are present at terminal positions of the fluoroelastomer chain;

5. The composition of Claim 1 wherein at least one cure site is selected from the group consisting of copolymerized brominated olefins, chlorinated olefins and iodinated olefins.

6. The composition of Claim 5 wherein the at least one cure site is a copolymerized iodinated olefin.

7. The composition of Claim 1 wherein at least one cure site is selected from the group consisting of copolymerized brominated unsaturated ethers, chlorinated unsaturated ethers, and iodinated unsaturated ethers.

8. The composition of Claim 7 wherein the at least one cure site is a copolymerized iodinated unsaturated ether.

9. The composition of Claim 1 wherein at least one cure site is selected from the group consisting of copolymerized non-conjugated dienes.

10. The composition of Claim 1 wherein at least one cure site is selected from the group consisting of iodine atoms and bromine atoms and mixtures thereof that are present at terminal positions of the fluoroelastomer chain.

11. The composition of Claim 10 wherein the at least one cure site is an iodine atom that is present at terminal positions of the fluoroelastomer chain.

12. The composition of Claim 5 wherein the cure site is a copolymerized brominated olefin.

13. The composition of Claim 12 wherein the cure site is a 4-bromo-3,3,4,4-tetrafluorobutene-1.

14. The composition of Claim 1 wherein the multifunctional crosslinking agent is a multifunctional acrylic crosslinking agent.

15. The composition of Claim 1 wherein the multifunctional crosslinking agent is a multifunctional methacrylic crosslinking agent.

16. The composition of Claim 1 wherein the multifunctional crosslinking agent is selected from multifunctional cyanurate crosslinking agents and multifunctional isocyanurate crosslinking agents.

17. The composition of Claim 15 wherein the multifunctional crosslinking agent is selected from triallyl isocyanurate and triallyl cyanurate.

18. The composition of Claim 1 wherein the UV initiator is a ketone.

## Patentansprüche

1. Hitzebeständige, UV-vernetzbare Elastomerzusammensetzung mit einer Mooney-Viskosität von 1-150, ML 1+4 (100°C) die aufweist:
a) 70 bis 99 Gew.-% eines Fluorelastomers mit mindestens einer Aushärtungsstelle, das aus der Gruppe ausgewählt ist, bestehend aus 1) copolymerisierten bromierten Olefinen, chlorierten Olefinen und iodierten Olefinen; 2) copolymerisierten bromierten ungesättigten Ethern, chlorierten ungesättigten Ethern und iodierten ungesättigten Ethern; 3) copolymerisierten nichtkonjugierten Dienen und Trienen und 4) Iodatomen, Bromatomen und Gemischen daraus, die in endständigen Positionen der Fluorelastomer-Kette anwesend sind;
b) 0,5 bis 20 Gew.-% eines multifunktionellen Vernetzungsmittels, das aus der Gruppe ausgewählt ist, die aus multifunktionellen Acryl-Vernetzungsmitteln, multifunktionellen Methacryl-Vernetzungsmitteln, multifunktionellen Cyanurat-Vernetzungsmitteln und multifunktionellen Isocyanurat-Vernetzungsmitteln besteht; und
c) 0,1 bis 10 Gew.-% eines UV-Initiators;
wobei die Elastomerzusammensetzung nicht mit einem freien radikalischen Aushärtungsprozeß ausgehärtet wird, der auf die thermische Zersetzung von Peroxiden angewiesen ist; und
wobei die Gewichtsanteile jeder der Komponenten a), b) und c) auf das kombinierte Gewicht der Komponenten a), b) und c) bezogen sind.

2. Zusammensetzung nach Anspruch 1, wobei das Fluorelastomer ein Copolymer ist, das copolymerisierte Vinylidenfluorid-Einheiten aufweist.

3. Zusammensetzung nach Anspruch 1, wobei das Fluorelastomer ein Copolymer ist, das copolymerisierte Tetrafluorethylen-Einheiten aufweist.

4. Zusammensetzung nach Anspruch 1, wobei mindestens eine Aushärtungsstelle aus der Gruppe ausgewählt ist, die aus 1) copolymerisierten iodierten Olefinen, 2) copolymerisierten iodierten ungesättigten Ethern; und 3) in endständigen Positionen der Fluorelastomer-Kette anwesenden Iodatomen besteht;

5. Zusammensetzung nach Anspruch 1, wobei mindestens eine Aushärtungsstelle aus der Gruppe ausgewählt ist, die aus copolymerisierten bromierten Olefinen, chlorierten Olefinen, und iodierten Olefinen besteht.

6. Zusammensetzung nach Anspruch 5, wobei die mindestens eine Aushärtungsstelle ein copolymerisiertes iodiertes Olefin ist.

7. Zusammensetzung nach Anspruch 1, wobei mindestens eine Aushärtungsstelle aus der Gruppe ausgewählt ist, die aus copolymerisierten bromierten ungesättigten Ethern, chlorierten ungesättigten Ethern und iodierten ungesättigten Ethern besteht.

8. Zusammensetzung nach Anspruch 7, wobei die mindestens eine Aushärtungsstelle ein copolymerisierter ungesättigter Ether ist.

9. Zusammensetzung nach Anspruch 1, wobei mindestens eine Aushärtungsstelle aus der Gruppe ausgewählt ist, die aus copolymerisierten nichtkonjugierten Dienen besteht.

10. Zusammensetzung nach Anspruch 1, wobei mindestens eine Aushärtungsstelle aus der Gruppe ausgewählt ist, die aus Iodatomen und Bromatomen und deren Gemischen besteht, die in endständigen Positionen der Fluorelastomer-Kette anwesend sind.

11. Zusammensetzung nach Anspruch 10, wobei die mindestens eine Aushärtungsstelle ein Iodatom ist, das in endständigen Positionen der Fluorelastomer-Kette anwesend ist.

12. Zusammensetzung nach Anspruch 5, wobei die Aushärtungsstelle ein copolymerisiertes bromiertes Olefin ist.

13. Zusammensetzung nach Anspruch 12, wobei die Aushärtungsstelle ein 4-Brom-3,3,4,4-Tetrafluorbuten-1 ist.

14. Zusammensetzung nach Anspruch 1, wobei das multifunktionelle Vernetzungsmittel ein multifunktionelles Acryl-Vernetzungsmittel ist.

15. Zusammensetzung nach Anspruch 1, wobei das multifunktionelle Vernetzungsmittel ein multifunktionelles Methacryl-Vernetzungsmittel ist.

16. Zusammensetzung nach Anspruch 1, wobei das multifunktionelle Vernetzungsmittel unter multifunktionellen Cyanurat-Vernetzungsmitteln und multifunktionellen Isocyanurat-Vernetzungsmitteln ausgewählt ist.

17. Zusammensetzung nach Anspruch 15, wobei das multifunktionelle Vernetzungsmittel unter Triallylisocyanurat und Triallylcyanurat ausgewählt ist.

18. Zusammensetzung nach Anspruch 1, wobei der UV-Initiator ein Keton ist.

## Revendications

1. Composition élastomère durcissable par UV, thermiquement stable, ayant une viscosité Mooney de 1 à 150, ML 1 + 4 (100°C), comprenant :
a) 70 à 99% en poids d'un élastomère fluoré ayant au moins un site de durcissement choisi dans le groupe comprenant 1) des oléfines bromées copolymérisées, des oléfines chlorées et des oléfines iodées ; 2) des éthers insaturés bromés copolymérisés, des éthers insaturés chlorés et des éthers insaturés iodés ; 3) des diènes et des triènes non conjugués copolymérisés et 4) des atomes d'iode, des atomes de brome et des mélanges de ceux-ci qui sont présent à des positions terminales de la chaîne de l'élastomère fluoré ;
b) 0,5 à 20% en poids d'un agent de réticulation multifonctionnel choisi dans le groupe comprenant des agents de réticulation acryliques multifonctionnels, des agents de réticulation méthacryliques multifonctionnels, des agents de réticulation cyanurates multifonctionnels et des agents de réticulation isocyanurates multifonctionnels ; et
c) 0,1 à 10% en poids d'un initiateur d'UV ;
où la composition élastomère n'est pas durcie en utilisant un processus de durcissement radicalaire qui dépend de la décomposition thermique de peroxydes ; et
où les pourcentages en poids de chacun des composants a), b) et c) sont basés sur le poids combiné des composants a), b) et c).

2. Composition selon la composition 1, dans laquelle l'élastomère fluoré est un copolymère comprenant des unités copolymérisées de fluorure de vinylidène.

3. Composition selon la revendication 1, dans laquelle l'élastomère fluoré est un copolymère comprenant des unités copolymérisées de tétrafluoroéthylène.

4. Composition selon la revendication 1, dans laquelle au moins un site de durcissement est choisi dans le groupe comprenant 1) des oléfines iodées copolymérisées ; 2) des éthers insaturés iodés copolymérisés et 3) des atomes d'iode qui sont présents à des positions terminales de la chaîne de l'élastomère fluoré.

5. Composition selon la revendication 1, dans laquelle au moins un site de durcissement est choisi dans le groupe comprenant des oléfines bromées copolymérisées, des oléfines chlorées et des oléfines iodées.

6. Composition selon la revendication 5, dans laquelle l'au moins un site de durcissement est une oléfine iodée copolymérisée.

7. Composition selon la revendication 1, dans laquelle au moins un site de durcissement est choisi dans le groupe comprenant des éthers insaturés bromés copolymérisés, des éthers insaturés chlorés et des éthers insaturés iodés.

8. Composition selon la revendication 7, dans laquelle l'au moins un site de durcissement est un éther insaturé iodé copolymérisé.

9. Composition selon la revendication 1, dans laquelle au moins un site de durcissement est choisi dans le groupe comprenant des diènes non conjugués copolymérisés.

10. Composition selon la revendication 1, dans laquelle au moins un site de durcissement est choisi dans le groupe comprenant des atomes d'iode et des atomes de brome et des mélanges de ceux-ci qui sont présents à des positions terminales de la chaîne de l'élastomère fluoré.

11. Composition selon la revendication 10, dans laquelle l'au moins un site de durcissement est un atome d'iode qui est présent à des positions terminales de la chaîne de l'élastomère fluoré.

12. Composition selon la revendication 5, dans laquelle le site de durcissement est une oléfine bromée copolymérisée.

13. Composition selon la revendication 12, dans laquelle le site de durcissement est un 4-bromo-3,3,4,4-tétrafluorobutène-1.

14. Composition selon la revendication 1, dans laquelle l'agent de réticulation multifonctionnel est un agent de réticulation acrylique multifonctionnel.

15. Composition selon la revendication 1, dans laquelle l'agent de réticulation multifonctionnel est un agent de réticulation méthacrylique multifonctionnel.

16. Composition selon la revendication 1, dans laquelle l'agent de réticulation multifonctionnel est choisi parmi des agents de réticulation cyanurates multifonctionnels et des agents de réticulation isocyanurates multifonctionnels.

17. composition selon la revendication 15, dans laquelle l'agent de réticulation multifonctionnel est choisi parmi l'isocyanurate triallylique et le cyanurate triallylique.

18. Composition selon la revendication 1, dans laquelle l'initiateur d'UV est une cétone.
